# EUROPEAN PATENT APPLICATION

(11) **EP 4 442 931 A1**
(43) Date of publication of application: **09.10.2024**
(21) Application number: 24168647.6
(22) Date of filing: 05.04.2024
(51) Int. Cl.: E04H 1/12, B65D 57/00, B65D 81/05

(54) **STACKING ELEMENT FOR EXHIBITION STAND FRAMES**

(30) Priority: 06.04.2023 BE 202305263
(71) Applicant: Aluvision N.V., 8500 Kortrijk (BE)
(72) Inventor: DELEU, Dirk Urbain, 9800 DEINZE (BE); LESAGE, Michiel Jacques, 9800 DEINZE (BE)
(74) Representative: Arnold & Siedsma

(57) **Abstract**

Stacking element comprising on the first surface a first positioning element which extends from the first surface in a first direction and the stacking element comprising on the second surface a second positioning element which extends from the second surface in a second direction, wherein one of the first positioning element and the second positioning element is provided to strike against an inner side of the upright edge of the frame of the first exhibition stand frame when the stacking element is arranged on a first exhibition stand frame of the two or more exhibition stand frames, and wherein the other of the first positioning element and the second positioning element is provided to extend over the upright edge on an outer side of the upright edge of the frame of the second exhibition stand frame when a second exhibition stand frame of the two or more exhibition stand frames is stacked on top of the first exhibition stand frame.

## Description

### Field of the invention

The invention relates to a stacking element configured to be arranged between two or more exhibition stand frames.

### Background

Exhibition stand frames are used in constructions, also referred to as stands, such as exhibition stands, advertising structures, or structures used in the entertainment industry, for instance stages.

Exhibition stand frames are formed by at least four profiles which together form a frame defining an exhibition stand panel plane, wherein the at least four profiles have a side wall which is bounded by an edge standing upright relative to the exhibition stand panel plane.

Exhibition stand frames can be reused and are regularly transported from one event to another event. Stand builders, i.e. persons constructing the stands, here typically stack one exhibition stand frame on the other. In other words, one exhibition stand frame is placed on top of another exhibition stand frame.

The exhibition stand frames tend to slide off each other during stacking. One or more exhibition stand frames are often also damaged, for instance by one exhibition stand frame bumping into another exhibition stand frame.

JP5914229 describes a corner support mechanism for packaging a panel material. The corner support mechanism supports the corners of a plurality of panel materials when the panel materials are stacked and packed.

### Summary of the invention

Embodiments of the invention have the object of simplifying the stacking of exhibition stand frames and to prevent damage during stacking and during transport.

According to a first aspect, a stacking element is provided which is configured to be arranged between two or more exhibition stand frames for the purpose of facilitating stacking of the two or more exhibition stand frames. The exhibition stand frames are formed by at least four profiles, these together forming a frame which defines an exhibition stand panel plane. The exhibition stand panel plane can for instance comprise a cloth or plate comprising for instance a drawing printed thereon. The at least four profiles have a side wall which is bounded by an edge standing upright relative to the exhibition stand panel plane.

The stacking element comprises a base with a first surface and a second surface lying opposite thereto. The stacking element comprises on the first surface a first positioning element which extends from the first surface in a first direction. On the second surface the stacking element comprises a second positioning element which extends from the second surface in a second direction. One of the first positioning element and the second positioning element is provided to strike or lie against an inner side of the upright edge of the frame of the first exhibition stand frame when the stacking element is arranged on a first exhibition stand frame of the two or more exhibition stand frames. The first positioning element can thus for instance be provided to strike against the upright edge on an inner side of the upright edge. The other of the first positioning element and the second positioning element is provided here to extend over the upright edge on an outer side of the upright edge of the frame of the first exhibition stand frame when a second exhibition stand frame of the two or more exhibition stand frames is stacked on top of the first exhibition stand frame. In the example wherein the first positioning element is provided to lie on the inner side of the frame the second positioning element will be provided to lie on the outer side of the frame of the second exhibition stand frame. The advantage hereof is that placing of the stacking element is extremely simple because one of the positioning elements, according to the above example the first positioning element, lies on an inner side of the edge and the other positioning element lies on an outer side of the edge. The positioning element lying on the inner side strikes against the edge when the stacking element is being placed and is prevented from further movement by the edge. In this way the stacking element can be positioned relative to the exhibition stand frame in simple manner. The stacking element further has the advantage that, once the stacking element has been placed on the first exhibition stand frame, the other positioning element, which is located on the outer side relative to the frame, in turn forms a stop against which the second exhibition stand frame can strike. The movement of the second exhibition stand frame which is stacked on top of the first exhibition stand frame will be stopped in that the second exhibition stand frame is stopped by the positioning element which is provided to lie against an outer side of the second exhibition stand frame. The stacking element can therefore be positioned relative to the first exhibition stand frame in simple manner and further allows the second exhibition stand frame to be stacked on the first exhibition stand frame in simple manner.

Preferably, the base is at least triangular, as seen in a direction perpendicularly of one of the first and the second surface, and the first positioning element and the second positioning element lie substantially parallel to one of the sides of the at least triangular base. The triangular base allows the stacking element to be arranged at least at the position of a corner of the exhibition stand frame. In this way the freedom of movement of the stacking element is reduced further. More specifically, in this way the positioning element will lie at least against a first peripheral edge of the exhibition stand frame. A movement in a direction of movement oriented transversely relative to the first peripheral edge will further also be prevented at the position of the corner of the exhibition stand frame. This allows the stacking element to be arranged on the exhibition stand frame in simpler manner, as well as allowing the plurality of exhibition stand frames to be stacked on top of each other in more robust manner.

More preferably, the at least triangular base takes the form of a right triangle and the first positioning element and the second positioning element are provided close to one of the right angle sides of the base. The first positioning element preferably lies adjacently of one of the angle sides and extends over at least a portion of the length of the angle side.

The first positioning element preferably comprises a first positioning element portion and a second positioning element portion which are provided adjacently of respectively a first angle side and a second angle side connecting thereto. In this way the stacking element can be mounted on the exhibition stand frame at the position of a corner in improved manner.

The stacking element preferably comprises at least one third positioning element which extends from the first surface in the first direction, wherein the third positioning element extends parallel to the first positioning element and is located at a distance from the first positioning element. In this way the first positioning element and the third positioning element form at least partially a channel, wherein the first positioning element and the third positioning element form channel walls. This allows the upright edge to be received in the channel, thus limiting the freedom of movement of the stacking element further. The at least one third positioning element can be parallel to the first positioning element portion or the second positioning element portion of the first positioning element. More preferably, the stacking element comprises at least two third positioning elements extending parallel to respectively the first positioning element portion and the second positioning element portion. This allows the two upright edges intersecting at the position of a corner of the exhibition stand frame to be accommodated in a channel formed by respectively a first positioning element portion and one of the at least two third positioning elements. In this way the stacking element can only be removed in a substantially upright direction of the exhibition stand frame, and the freedom of movement of the stacking element is limited in almost every other direction of movement.

A first recess is preferably provided between the first positioning element portion and the second positioning element portion, which first recess is provided at the position of an intersection between the two connecting angle sides. In this way space is on one hand created which allows the corner of the exhibition stand profile to be accommodated at least partially. The created space allows tolerances in the manufacturing process of the exhibition stand frames to be accommodated, which further simplifies arranging of the stacking element. More preferably, a second recess is provided between the two third positioning elements and the second recess is aligned with the first recess. The first recess, and preferably the second recess, further preferably has a dimension greater than a width of an upright edge of an exhibition stand profile, preferably at least two times greater than a width of an upright edge of one exhibition stand profile. This allows the stacking element to be arranged on two mutually adjacent exhibition stand frames.

The stacking element preferably further comprises a fourth positioning element extending from the first surface in the first direction, wherein the fourth positioning element lies adjacently of and parallel to a third angle side between the first angle side and the second angle side. The fourth positioning element is further preferably provided with a third recess which is aligned with the first recess.

Preferably, the second positioning element is provided at a distance from one of the angle sides and the second positioning element extends over at least a portion of the length of the respective angle side. The distance between the angle side and the second positioning element further preferably substantially corresponds with a width of the upright edge of the exhibition stand profile.

The third positioning element preferably comprises a first positioning element portion and a second positioning element portion which are provided on respectively a first angle side and a second angle side of the base connecting thereto.

A fourth recess is further preferably provided between the first positioning element portion of the third positioning element and the second positioning element portion of the third positioning element, which fourth recess is provided at the position of an intersection between the two connecting angle sides.

The stacking element preferably further comprises a fifth positioning element extending from the second surface in the second direction, wherein the fifth positioning element lies parallel to and at a distance from a third angle side, between the first angle side and the second angle side.

The fifth positioning element is further preferably provided with a fifth recess which is aligned with the fourth recess.

The stacking element is preferably integrally formed.

### Clauses:

Clause 1: A stacking element (100) which is configured to be arranged between two or more exhibition stand frames (S1, S2) for the purpose of facilitating stacking of the two or more exhibition stand frames, which exhibition stand frames are formed by at least four profiles which together form a frame defining an exhibition stand panel plane (V), wherein the at least four profiles have a side wall which is bounded by an upright edge (R) standing upright relative to the exhibition stand panel plane, the stacking element (100) comprising a base (110) with a first surface (112) and a second surface lying opposite thereto, wherein the stacking element (100) comprises on the first surface a first positioning element (120; 120a, 120b) which extends from the first surface in a first direction and the stacking element (100) comprises on the second surface a second positioning element (130; 130a, 130b) which extends from the second surface in a second direction, wherein one of the first positioning element (120) and the second positioning element (130) is provided to strike against an inner side of the upright edge (R1) of the frame of the first exhibition stand frame when the stacking element is arranged on a first exhibition stand frame (S1) of the two or more exhibition stand frames, and wherein the other of the first positioning element and the second positioning element is provided to extend over the upright edge on an outer side of the upright edge (R2) of the frame of the second exhibition stand frame when a second exhibition stand frame (S2) of the two or more exhibition stand frames is stacked on top of the first exhibition stand frame.
Clause 2: The stacking element according to the foregoing clause, wherein the base is at least triangular, as seen in a direction perpendicularly of one of the first and the second surface, and the first positioning element and the second positioning element lie substantially parallel to one of the sides (113, 114, 115) of the at least triangular base.
Clause 3: The stacking element according to the foregoing clause, wherein the at least triangular base takes the form of a right triangle and the first positioning element (120) and the second positioning element (130) are provided close to one of the right angle sides of the base.
Clause 4: The stacking element according to any one of the foregoing clauses 2-3, wherein the first positioning element (120) lies adjacently of one of the angle sides and extends over at least a portion of the length of the angle side.
Clause 5: The stacking element according to any one of the foregoing clauses 2-4, wherein the first positioning element (120) comprises a first positioning element portion (120a) and a second positioning element portion (120b) which are provided adjacently of respectively a first angle side (113) and a second angle side (114) connecting thereto.
Clause 6: The stacking element according to any one of the foregoing clauses 2-5, further comprising at least one third positioning element (140a, 140b) which extends from the first surface in the first direction, wherein the third positioning element (140) extends parallel to the first positioning element (120; 120a, 120b) and is located at a distance from the first positioning element.
Clause 7: The stacking element according to the foregoing clause, comprising at least two third positioning elements (140a, 140b) which extend parallel to respectively the first positioning element portion (120a) and the second positioning element portion (120b).
Clause 8: The stacking element according to any one of the foregoing claims 5-7, wherein a first recess (U1) is provided between the first positioning element portion and the second positioning element portion, which first recess (U1) is provided at the position of an intersection between the two connecting angle sides (113, 114).
Clause 9: The stacking element according to the clauses 7-8, wherein a second recess (U2) is provided between the two third positioning elements (140a, 140b) and wherein the second recess is aligned with the first recess (U1).
Clause 10: The stacking element according to any one of the foregoing clauses 8-9, wherein the first recess, and preferably the second recess, has a dimension greater than a width of the upright edge of an exhibition stand profile, preferably at least two times greater than a width of an upright edge of one exhibition stand profile.
Clause 11: The stacking element according to any one of the foregoing clauses 2-10, further comprising a fourth positioning element (150a, 150b) which extends from the first surface in the first direction, wherein the fourth positioning element lies adjacently of and parallel to a third angle side (115) between the first angle side (113) and the second angle side (114).
Clause 12: The stacking element according to the foregoing clause and any one of clauses 8-10, wherein the fourth positioning element (150a, 150b) is provided with a third recess (U3) which is aligned with the first recess (U1).
Clause 13: The stacking element according to any one of the foregoing clauses 2-12, wherein the second positioning element (130) is provided at a distance (A2) from one of the angle sides (113, 114) and extends over at least a portion of the length of the respective angle side.
Clause 14: The stacking element according to the foregoing clause, wherein the distance between the angle side and the second positioning element substantially corresponds with a width of the upright edge of the exhibition stand profile.
Clause 15: The stacking element according to any one of the foregoing clauses 6-14, wherein the second positioning element (130) comprises a first positioning element portion (130a) and a second positioning element portion (130b) which are provided on respectively a first angle side (113) and a second angle side (114) of the base connecting thereto.
Clause 16: The stacking element according to the foregoing clause, wherein a fourth recess (U4) is provided between the first positioning element portion of the second positioning element (130) and the second positioning element portion of the second positioning element (130), which fourth recess (U4) is provided at the position of an intersection between the two connecting angle sides (113, 114).
Clause 17: The stacking element according to any one of the foregoing clauses 2-16, further comprising a fifth positioning element (160a, 160b) which extends from the second surface in the second direction, wherein the fifth positioning element lies parallel to and at a distance from a third angle side (115), between the first angle side (113) and the second angle side (114).
Clause 18: The stacking element according to the foregoing clause, wherein the fifth positioning element (160a, 160b) is provided with a fifth recess (U5) which is aligned with the fourth recess (U4).
Clause 19: The stacking element according to any one of the foregoing clauses, wherein the stacking element is integrally formed.

### Brief description of the figures

The above stated and other advantageous features and objects of the invention will become more apparent, and the invention better understood, on the basis of the following detailed description when read in combination with the accompanying drawings, in which:
Figure 1 is a perspective view of a stacking element according to an exemplary embodiment which is arranged between two exhibition stand frames;
Figure 2 is a perspective view as seen from above of a stacking element according to a further exemplary embodiment;
Figure 3 is a top view of the exemplary embodiment shown in figure 2;
Figure 4 is a perspective view as seen from below of a stacking element according to an exemplary embodiment;
Figure 5 is a top view of the exemplary embodiment shown in figure 2;
Figure 6 is a perspective view wherein two exhibition stand frames are stacked on top of each other using a stacking element according to an exemplary embodiment;
Figure 7 is a perspective view wherein a stacking element according to an exemplary embodiment is used with two mutually adjacent exhibition stand frames.

### Detailed embodiments

The following detailed description relates to determined specific embodiments. The teaching hereof can however be applied in different ways.

The present invention will be described with reference to specific embodiments. The invention is however not limited thereto, but solely by the claims.

As used here, the singular forms "a" and "the" comprise both the singular and plural references, unless clearly indicated otherwise by the context.

The terms "comprising", "comprises" and "composed of" as used here are synonymous with "including". The terms "comprising", "comprises" and "composed of" when referring to stated components, elements or method steps also comprise embodiments which "consist of" the components, elements or method steps.

The terms first, second, third and so on are further used in the description and in the claims to distinguish between similar elements and not necessarily to describe a sequential or chronological order, unless this is specified. It will be apparent that the thus used terms are mutually interchangeable under appropriate circumstances and that the embodiments of the invention described here can operate in an order other than described or illustrated here.

Reference in this specification to "one embodiment", "an embodiment", "some aspects", "an aspect" or "one aspect" means that a determined feature, structure or characteristic described with reference to the embodiment or aspect is included in at least one embodiment of the present invention. The manifestations of the sentences "in one embodiment", "in an embodiment", "some aspects", "an aspect" or "one aspect" in different places in this specification thus do not necessarily all refer to the same embodiment or aspects. As will be apparent to a skilled person in this field, the specific features, structures or characteristics can further be combined in any suitable manner in one or more embodiments or aspects. Although some embodiments or aspects described here comprise some but no other features which are included in other embodiments or aspects, combinations of features of different embodiments or aspects are further intended to fall within the context of the invention and to form different embodiments or aspects, as would be apparent to the skilled person. In the appended claims all features of the claimed embodiments or aspects can for instance be used in any combination.

The same or similar elements are designated in the drawings with the same reference numerals.

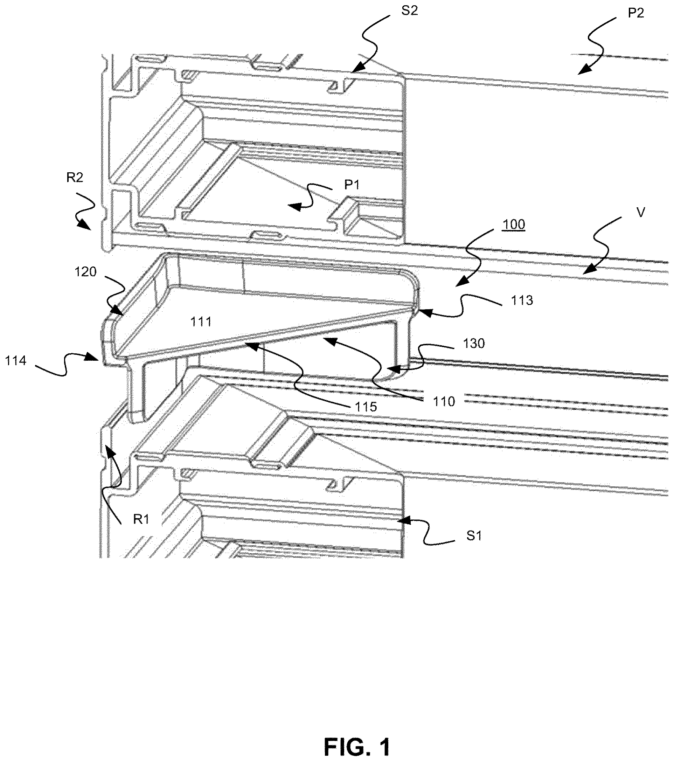

Figure 1 shows a perspective view of a stacking element 100 according to an exemplary embodiment. Stacking element 100 is configured to be arranged between two exhibition stand frames S1, S2. In the figure exhibition stand frame S2 is stacked on top of exhibition stand frame S1.

The exhibition stand frames S1, S2 are formed by at least four profiles, of which a first profile P1 is shown in cross-section and a second profile P2 is shown in lying position. The four profiles together form a frame, for instance a rectangular frame bounded by the four profiles. The frame defines an exhibition stand panel plane V. In figure 1 the exhibition stand panel plane V is filled at least partially by a cloth or panel on which a print or advertising message can be displayed. The at least four profiles have a side wall which is bounded by an edge R1, R2 standing upright relative to the exhibition stand panel plane.

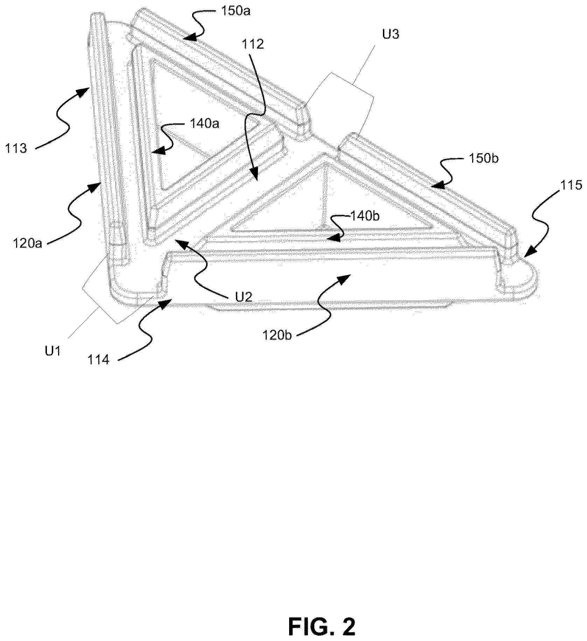

The stacking element 100 is provided in order to facilitate arranging of one exhibition stand frame S2 on the other exhibition stand frame S 1. The stacking element 100 comprises a base 110 with a first surface 111 and a second surface lying opposite thereto. In the view shown in figure 1 only the first surface 111 is visible. The second surface is visible and designated with reference numeral 112 in figure 2. The first surface 111 is also referred to as the upper surface. The second surface is also referred to as the lower surface. Stacking element 100 is shown in its most practical orientation in figure 1, i.e. with the first surface 111 facing upward. It is however also possible to reverse stacking element 100 and orient it with the first surface 111 downward.

Stacking element 100 comprises on first surface 111 a first positioning element 120 which extends from first surface 111 in a first direction. In the figure the first direction is an upward direction. Stacking element 100 further comprises on the second surface a second positioning element 130 which extends from the second surface in a second direction. In the figure the second direction is a downward direction. In order to facilitate stacking at least one of the first positioning element 120 and the second positioning element 130 is provided to strike against an inner side of upright edge R1 of the frame of the first exhibition stand frame S1, and the other of the first positioning element 120 and the second positioning element 130 is provided to extend over the upright edge on an outer side of upright edge R2 of the frame of the second exhibition stand frame. In the exemplary embodiment shown in figure 1 the first positioning element 120 is provided to extend over the upright edge R2 on an outer side of upright edge R2 of the frame of the second exhibition stand frame S2 and the second positioning element 130 is provided to strike against an inner side of upright edge R1 of the frame of the first exhibition stand frame S1. The advantage hereof is that placing of the stacking element 100 is extremely simple because one of the positioning elements 120, 130, according to the above example the second positioning element 130, lies on an inner side of the edge R1 and the other positioning element 120 lies on an outer side of the edge. The positioning element 130 lying on the inner side strikes against the edge when stacking element 100 is placed against the exhibition stand frame and is prevented from further movement by the edge. In this way stacking element 100 can be positioned relative to exhibition stand frame S1 in simple manner. Stacking element 100 further has the advantage that, once stacking element 100 has been placed on the first exhibition stand frame S1, the other positioning element which is situated on the outer side relative to the frame in turn forms a stop against which the second exhibition stand frame S2 can strike. The movement of the second exhibition stand frame S2 which is stacked on the first exhibition stand frame S1 will be stopped by the positioning element 120 which is provided to lie against an outer side of the second exhibition stand frame S2. Stacking element 100 can therefore be positioned relative to the first exhibition stand frame in simple manner and further allows the second exhibition stand frame to be stacked on the first exhibition stand frame in simple manner.

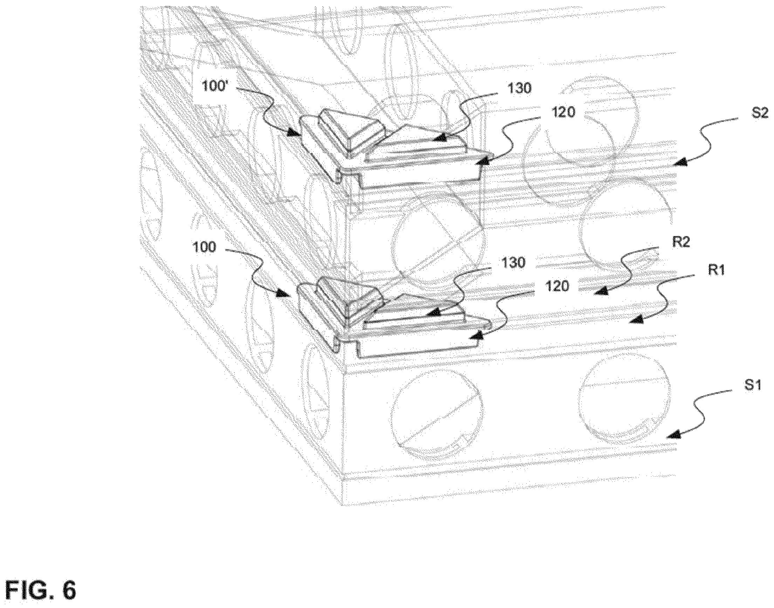

It is noted that, as shown in figure 6, the first positioning element 120 can also be provided to extend over upright edge R1 on an outer side of upright edge R1 of the frame of the first exhibition stand frame S 1. The second positioning element 130 is provided here to strike against an inner side of upright edge R2 of the frame of the second exhibition stand frame S2.

Figure 1 further shows that the base 110, as seen in a direction perpendicularly of one of the first and the second surface, is at least triangular. The base 110 can particularly be triangular with a right angle. The base can also be rectangular or even square. Such exemplary embodiments however have the drawback that a large part of the base remains unused. Such exemplary embodiments are typically more expensive to produce and are therefore less preferable.

Figure 1 further shows that the first positioning element 120 and the second positioning element 130 lie substantially parallel to one of the sides 113, 114, 115 of the at least triangular base. An exemplary embodiment wherein the first positioning element 120 only lies parallel to one angle side is not shown. The figure shows an exemplary embodiment wherein the first positioning element 120 and the second positioning element 130 lie adjacently of the two connecting angle sides 113, 114.The first positioning element 120 has here a positioning element portion lying parallel to the first angle side 113 and a second positioning element portion lying parallel to the second angle side 114. Such an exemplary embodiment will be discussed at length below. In the exemplary embodiment shown in figure 1 the angle between the first angle side 113 and the second angle side 114 is a right angle.

The stacking element 100 shown in figure 1 comprises a first positioning element 120 which extends along the whole first angle side 113 and second angle side 114. In this way an upright edge is formed along the whole right angle side. In figure 1 the first and a second positioning element portion are connected to each other at the position of the intersection of the first angle side 113 and the second angle side 114 so that they form one positioning element. Just as the first positioning element, the second positioning element 130 extends parallel to the first angle side 113 and the second angle side 114. The second positioning element 130 is however provided at a distance from the first angle side 113 and the second angle side 114.

In contrast to the exemplary embodiments shown in figures 2, 3, 4 and 5, no positioning element is provided parallel to the third angle side 115 in the exemplary embodiment shown in figure 1. This allows the cloth or the plate forming the exhibition stand panel plane V to remain mounted on the second exhibition stand frame so that less disassembly is required.

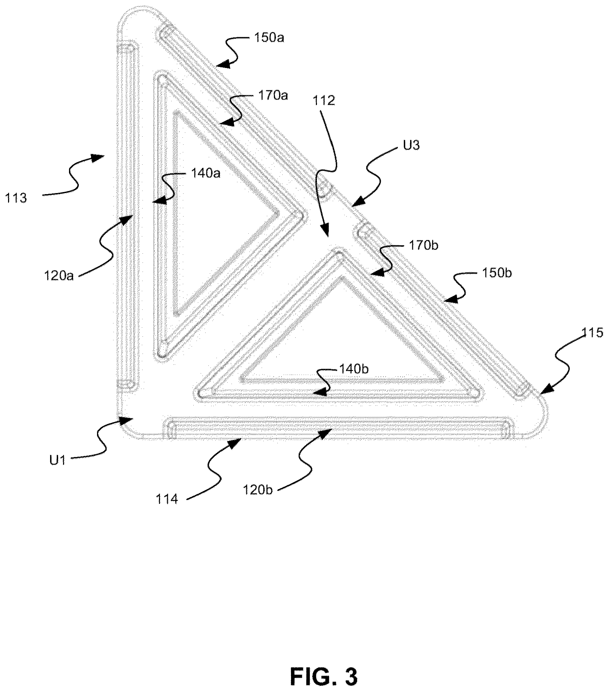

Figure 2 shows a perspective view of the second surface of the base of a stacking element 100 according to a further exemplary embodiment. Figure 3 shows the exemplary embodiment shown in figure 2 in a view perpendicularly of the second surface 112. The elucidation below therefore applies to both figure 2 and figure 3. In the shown exemplary embodiment the first positioning element 120 is provided to extend over the upright edge on an outer side of upright edge of the frame of the exhibition stand frame. As shown in figures 2, 3, 4, 5, 6 and 7, the first positioning element 120 can also extend from the second surface of the base.

In the shown exemplary embodiment the first positioning element 120 comprises a first positioning element portion 120a and a second positioning element portion 120b. The first positioning element portion 120a lies adjacently of the first angle side 113 of the base. The second positioning element portion 120b lies adjacently of a second angle side 114 connecting to the first angle side 113.

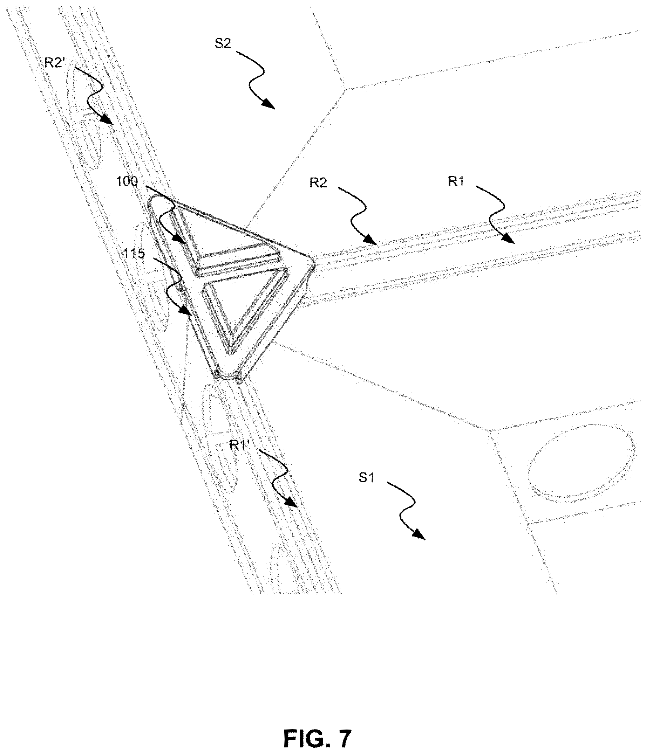

A first recess U1 can be provided between the first positioning element portion 120a and the second positioning element portion 120b of the first positioning element 120. The first recess U1 is provided at the position of an intersection of the two connecting angle sides 113, 114. In this way space which allows the corner of the exhibition stand profile to be accommodated at least partially is on one hand created. The created space allows tolerances in the manufacturing process of the exhibition stand frames to be accommodated, which further simplifies arranging of the stacking element 100. This also allows the stacking element 100, as shown in figure 7, to be arranged over two edges R1 and R2 of mutually adjacent exhibition stand frames S1, S2. More specifically, as shown in figure 7, stacking element 100 can be arranged so that the third angle side 115 extends in line with the one exhibition stand frame S1 toward the second exhibition stand frame S2. The recess U1 allows stacking element 100 to be arranged over the two upright edges R1, R2 of the two exhibition stand frames S1, S2 lying against each other. In this exemplary embodiment the third angle side 115 will lie in line with the upright edges R1', R2' lying in line with each other. Furthermore, as will be further elucidated, when the first positioning element portion 120a and the second positioning element portion 120b of the first positioning element 120 is used in combination with a fourth positioning element 150, the stacking element can also function as protection when it is arranged over two exhibition stand frames S1, S2.

As shown in figures 2 and 3, stacking element 100 can further comprise at least one third positioning element 140 which extends from the first surface in the first direction. The at least one third positioning element extends parallel to the first positioning element and is located at a distance from the first positioning element. In the shown exemplary embodiment the first positioning element comprises a first positioning element portion 120a and a second positioning element portion 120b. In the shown exemplary embodiment the third positioning element 140 comprises a first positioning element portion 140a and a second positioning element portion 140b. The first positioning element portion 140a and the second positioning element portion 140b of the third positioning element 140 can also be deemed two third positioning elements. The at least one third positioning element lies parallel to the first positioning element 120. Figures 2 and 3 show an exemplary embodiment wherein the first positioning element portion 140a and the second positioning element portion 140b of the third positioning element 140 lie parallel to respectively the first positioning element portion 120a and the second positioning element portion 120b of the first positioning element 120. In this way the first positioning element 120 and the third positioning element 140 form at least partially a channel, wherein the first positioning element and the third positioning element form channel walls. This allows the upright edge to be received in the channel, thus limiting the freedom of movement of the stacking element further. Furthermore, a second recess U2 can be provided between the two third positioning element portions 140a, 140b, and the second recess is aligned with the first recess U1. Although not visible in figure 7, recess U2 allows stacking element 100 to be arranged over the two upright edges R1, R2 of the two exhibition stand frames S1, S2 lying against each other.

The first recess U1, and preferably the second recess U2, have a dimension greater than a width of the upright edge of an exhibition stand profile, preferably at least two times greater than a width of an upright edge of one exhibition stand profile.

Figures 2 and 3 further show that stacking element 100 can comprise a fourth positioning element 150a, 150b. A plurality of fourth positioning elements can also be provided, for instance a first fourth positioning element 150a and a second fourth positioning element 150b. The fourth positioning element 150a, 150b extends from the first surface in the first direction. The fourth positioning element lies adjacently of and parallel to the third angle side 115. The fourth positioning element 150a, 150b can be arranged over one or more edges of an exhibition stand frame, for instance the edges R1', R2' lying mutually in line, as shown in figure 7. The fourth positioning element 150a, 150b protects the profiles of the exhibition stand frames in this way.

When the fourth positioning element 150a, 150b is provided with a third recess U3 which is aligned with the first recess U1, the stacking element can be provided with two mutually adjacent exhibition stand frames at the position of the corner points. In this way the stacking element is thus usable at the position of one corner of one exhibition stand frame, as well as when two mutually adjacent exhibition stand frames overlap.

Figures 2 and 3 further show that a sixth positioning element 170, 170a, 170b can be provided. The sixth positioning element 170, 170a, 170b lies parallel to and at a distance from the fourth positioning element 150a, 150b. In the figures two sixth positioning elements 170a, 170b are shown, which two sixth positioning elements 170a, 170b can also be deemed positioning element portions of one positioning element. The first positioning element portion 170a and the second positioning element portion 170b of the sixth positioning element 170 lie parallel to respectively the first positioning element portion 150a and the second positioning element portion 150b of the fourth positioning element 150. In this way the fourth positioning element 150 and the sixth positioning element 170 form at least partially a channel. This allows the upright edge to be received in the channel, thus limiting the freedom of movement of the stacking element further. In this way the channel can further also receive two edges R1', R2' lying mutually in line so that the stacking element of one exhibition stand frame overlaps the second exhibition stand frame S2 lying adjacently thereof, as shown in figure 7.

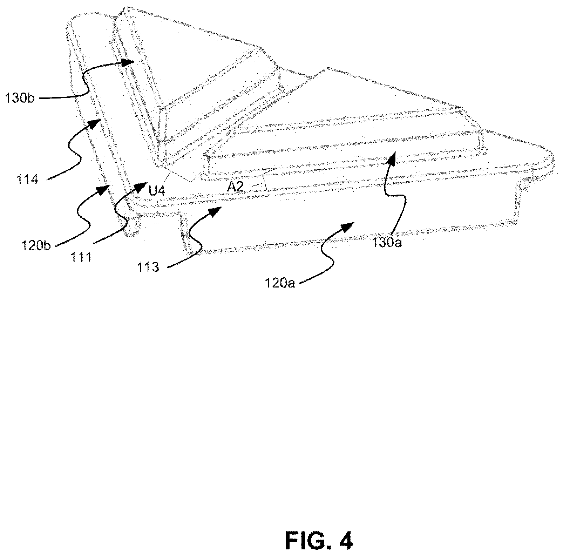

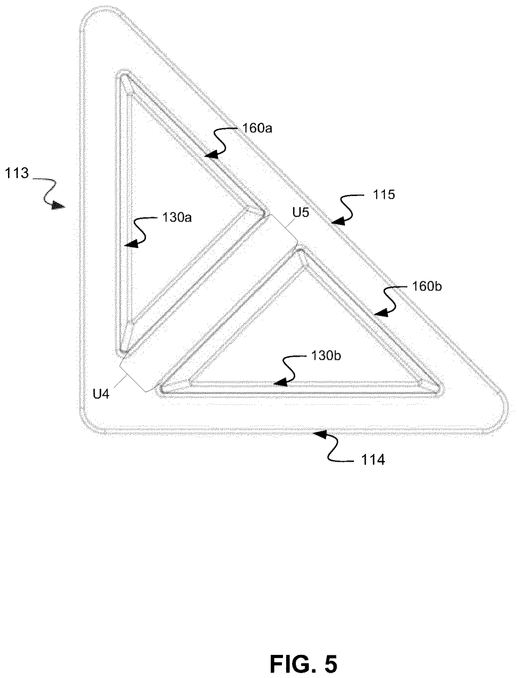

Figure 4 shows a perspective view of the first surface of the stacking element according to an exemplary embodiment. Figure 5 shows the exemplary embodiment shown in figure 4 in a view perpendicularly of the first surface 11. The elucidation below therefore applies to both figure 4 and figure 5.

Figures 4 and 5 show that the second positioning element 130 is provided at a distance A2 from one of the angle sides 113, 114 and extends over at least a portion of the length of the respective angle side. The distance between the angle side 113, 114 and the second positioning element substantially corresponds with a width of the upright edge of the exhibition stand profile. This allows the upright edges to be clamped indirectly between the second positioning element 130 and the first positioning element 120.

The second positioning element 130 can comprise a first positioning element portion 130a and a second positioning element portion 130b which are provided on respectively a first angle side 113 and a second angle side 114 of the base connecting thereto.

A fourth recess U4 can be provided between the first positioning element portion of the second positioning element 130 and the second positioning element portion of the second positioning element 130. The fourth recess U4 is provided at the position of an intersection between the two connecting angle sides 113, 114. The fourth recess functions as channel for receiving two edges of two exhibition stand frames. This allows two edges of two further exhibition stand frames to be arranged in the fourth recess. More specifically, two further exhibition stand frames can be arranged on the exhibition stand frames S1, S2 lying adjacently of each other in figure 7.

The stacking element can further also comprise a fifth positioning element 160a, 160b which extends from the second surface in the second direction, wherein the fifth positioning element 160a, 160b lies parallel to and at a distance from a third angle side 115. The fifth positioning element 160a, 160b can be provided with a fifth recess U5 which is aligned with the fourth recess U4.

Figure 6 shows a perspective view wherein two exhibition stand frames S1, S2 are stacked on top of each other using a stacking element 100 according to an exemplary embodiment.

Figure 6 more specifically shows that a first stacking element 100 is arranged at the position of a corner of a first exhibition stand frame S1. The stacking element 100 corresponds with the exemplary embodiments shown in figures 2, 3, 4, 5.

Stacking element 100 is directed with the second surface toward the first exhibition stand frame S1 and is provided with a first positioning element 120 provided to extend over the upright edge R1 on an outer side of the upright edge R1 of the frame of the first exhibition stand frame S1, and the second positioning element 130 is provided to strike against an inner side of the upright edge R2 of the frame of the second exhibition stand frame S2. The advantage hereof is that placing of stacking element 100 is extremely simple because one of the positioning elements 120, 130, according to the above example the first positioning element 120, lies on an inner side of the edge R1, and the other positioning element 130 lies on an outer side of the edge. The positioning element 130 lying on the inner side allows the second exhibition stand frame to be arranged on the stacking element in simple manner. In this way exhibition stand frame S2 can be positioned on the stacking element in simple manner.

The skilled person will appreciate on the basis of the above description that the invention can be embodied in different ways and on the basis of different principles. The invention is not limited here to the above described embodiments. The above described embodiments and the figures are purely illustrative and serve only to increase understanding of the invention. The invention will not therefore be limited to the embodiments described herein, but is defined in the claims.

## Claims

1. A stacking element (100) which is configured to be arranged between two or more exhibition stand frames (S1, S2) for the purpose of facilitating stacking of the two or more exhibition stand frames, which exhibition stand frames are formed by at least four profiles which together form a frame defining an exhibition stand panel plane (V), wherein the at least four profiles have a side wall which is bounded by an upright edge (R) standing upright relative to the exhibition stand panel plane, the stacking element (100) comprising a base (110) with a first surface (112) and a second surface lying opposite thereto, wherein the stacking element (100) comprises on the first surface a first positioning element (120; 120a, 120b) which extends from the first surface in a first direction and the stacking element (100) comprises on the second surface a second positioning element (130; 130a, 130b) which extends from the second surface in a second direction, wherein one of the first positioning element (120) and the second positioning element (130) is provided to strike against an inner side of the upright edge (R1) of the frame of the first exhibition stand frame when the stacking element is arranged on a first exhibition stand frame (S1) of the two or more exhibition stand frames, and wherein the other of the first positioning element and the second positioning element is provided to extend over the upright edge on an outer side of the upright edge (R2) of the frame of the second exhibition stand frame when a second exhibition stand frame (S2) of the two or more exhibition stand frames is stacked on top of the first exhibition stand frame, wherein the base is at least triangular, as seen in a direction perpendicularly of one of the first and the second surface, and the first positioning element and the second positioning element lie substantially parallel to one of the sides (113, 114, 115) of the at least triangular base, wherein the first positioning element (120) comprises a first positioning element portion (120a) and a second positioning element portion (120b) which are provided adjacently of respectively a first angle side (113) and a second angle side (114) connecting thereto, wherein a first recess (U1) is provided between the first positioning element portion and the second positioning element portion, which first recess (U1) is provided at the position of an intersection between the two connecting angle sides (113, 114), wherein the first recess, and preferably the second recess, has a dimension greater than a width of the upright edge of an exhibition stand profile, preferably at least two times greater than a width of an upright edge of one exhibition stand profile.

2. The stacking element according to the foregoing claim, wherein the at least triangular base takes the form of a right triangle and the first positioning element (120) and the second positioning element (130) are provided close to one of the right angle sides of the base.

3. The stacking element according to any one of the foregoing claims, wherein the first positioning element (120) lies adjacently of one of the angle sides and extends over at least a portion of the length of the angle side.

4. The stacking element according to any one of the foregoing claims, further comprising at least one third positioning element (140a, 140b) which extends from the first surface in the first direction, wherein the third positioning element (140) extends parallel to the first positioning element (120; 120a, 120b) and is located at a distance from the first positioning element.

5. The stacking element according to the foregoing claim, comprising at least two third positioning elements (140a, 140b) which extend parallel to respectively the first positioning element portion (120a) and the second positioning element portion (120b).

6. The stacking element according to claim 5, wherein a second recess (U2) is provided between the two third positioning elements (140a, 140b) and wherein the second recess is aligned with the first recess (U1).

7. The stacking element according to any one of the foregoing claims, further comprising a fourth positioning element (150a, 150b) which extends from the first surface in the first direction, wherein the fourth positioning element lies adjacently of and parallel to a third angle side (115) between the first angle side (113) and the second angle side (114).

8. The stacking element according to the foregoing claim, wherein the fourth positioning element (150a, 150b) is provided with a third recess (U3) which is aligned with the first recess (U1).

9. The stacking element according to any one of the foregoing claims, wherein the second positioning element (130) is provided at a distance (A2) from one of the angle sides (113, 114) and extends over at least a portion of the length of the respective angle side.

10. The stacking element according to the foregoing claim, wherein the distance between the angle side and the second positioning element substantially corresponds with a width of the upright edge of the exhibition stand profile.

11. The stacking element according to any one of the foregoing claims 4-10, wherein the second positioning element (130) comprises a first positioning element portion (130a) and a second positioning element portion (130b) which are provided on respectively a first angle side (113) and a second angle side (114) of the base connecting thereto.

12. The stacking element according to the foregoing claim, wherein a fourth recess (U4) is provided between the first positioning element portion of the second positioning element (130) and the second positioning element portion of the second positioning element (130), which fourth recess (U4) is provided at the position of an intersection between the two connecting angle sides (113, 114).

13. The stacking element according to any one of the foregoing claims, further comprising a fifth positioning element (160a, 160b) which extends from the second surface in the second direction, wherein the fifth positioning element lies parallel to and at a distance from a third angle side (115), between the first angle side (113) and the second angle side (114).

14. The stacking element according to the foregoing claim, wherein the fifth positioning element (160a, 160b) is provided with a fifth recess (U5) which is aligned with the fourth recess (U4).

15. The stacking element according to any one of the foregoing claims, wherein the stacking element is integrally formed.
